# EUROPÄISCHE PATENTSCHRIFT

(11) **EP 1 064 480 B1**
(45) Veröffentlichungstag und Bekanntmachung des Hinweises auf die Patenterteilung: **05.03.2003**
(21) Anmeldenummer: 98939659.3
(22) Anmeldetag: 06.08.1998
(51) Int. Cl.: F16J 15/36

(54) **GLEITRINGDICHTUNGSANORDNUNG**
MECHANICAL SEAL SYSTEM
JOINT ROTATIF

(30) Priorität: 20.03.1998 DE 29805089 U
(43) Veröffentlichungstag der Anmeldung: 03.01.2001
(73) Patentinhaber: Burgmann Dichtungswerke GmbH & Co. KG, 82515 Wolfratshausen (DE)
(72) Erfinder: KELLER, Thomas, D-82538 Geretsried (DE); REINFRANK, Ulrich, D-82544 Edling (DE); RIES, Wolfgang, D-82438 Eschenlohe (DE); SVEJKOVSKY, Reinhard, D-82538 Geretsried (DE); WOPPOWA, Robert, D-82515 Wolfratshausen (DE); ZIEGENBEIN, Dieter, D-82538 Geretsried (DE)
(74) Vertreter: Schmidt, Horst, Dr.
(86) Internationale Anmeldenummer: EP9804902
(87) Internationale Veröffentlichungsnummer: WO99049245

(56) Entgegenhaltungen:
- FR-A- 1 121 160
- GB-A- 2 019 956
- US-A- 2 467 239
- US-A- 3 020 052

## Beschreibung

Die Erfindung betrifft eine Gleitringdichtungsanordnung gemäss dem Oberbegriff des Patentanspruches 1.

Die Erfindung bezieht sich damit allgemein auf Gleitringdichtungsanordnungen mit einem Balgelement aus nachgiebigem Material zur Schaffung einer axial nachgiebigen Verbindung eines Gleitrings mit einem rotierenden Bauteil, wie ese z.B. aus Burgmann Lexikon, ABC der Gleitringdichtung, 1988 Selbstverlag, S. 22-23 bekannt ist. Das Balgelement übernimmt zugleich die Aufgabe der dynamischen Sekundärdichtung, was den Aufbau der Gleitringdichtungsanordnung weniger kompliziert macht. Ausserdem sind Gleitringdichtungsanordnungen auf Basis eines solchen Balgelementes unempfindlich gegen Verschmutzungen und Ablagerungen. Aus den USen-A-3020052 und 2467239 sind Gleitringdichtungsanordnungen mit Balgelement und einem Mitnehmergehäuse zur Drehmomentübertragung auf den betreffenden Gleitring bekannt. Dabei hat der Gleitring nicht nur eine fertigungsungünstige T-Form, sondern ist ausserdem in seinen radialen Abmessungen grösser als die einer Wellendurchgangsöffnung im Mitnehmergehäuse gestaltet, so dass zwar ein gefürchtetes Eindringen des Gleitringes in die Durchgangsöffnung unter bestimmten auf den Gleitring bei Betrieb einwirkenden hydraulischen Drücken vermieden werden kann, dieser Vorteil jedoch durch deutlich höhere Bereitstellungskosten für die Gleitringdichtungsanordnung eingekauft wird.

Aufgabe der Erfindung ist es, eine Gleitringdichtungsanordnung der gattungsgmässen Art hinsichtlich ihrer baulichen, insbesondere radialen Abmessungen zu minimieren. Ferner soll die Gleitringdichtungsanordnung mit einfach gestalteten Gleitringen auskommen, die die Voraussetzungen für eine kostengünstige Grosserienproduktion bieten und eine hohe Betriebszuverlässigkeit haben.

Bezüglich der Lösung dieser Aufgabe wird auf den kennzeichnenden Teil des Patentanspruches 1 verwiesen

Die Gleitringdichtungsanordnung nach der Erfindung zeichnet sich aus durch ein vom Balgelement gehaltenes, im wesentlichen steifes Stützelement mit einer bestimmten radialen Aussenabmessung. Durch das Vorsehen des steifen Stützelementes, an dem sich der rotierende Gleitring beim Betrieb abstützen kann, wird verhindert, dass der Gleitring, obschon er eine minimale radiale Abmessung aufweisen kann, unter axialen auf die Gleitringdichtungsanordnung einwirkenden Kräften in zerstörerischem oder schädigendem Eingriff mit dem Balgelement aus nachgiebigem Material treten kann. Ferner wird wirksam vermieden, dass der Gleitring in eine Durchgangsöffnung oder Bohrung im Mitnehmergehäuse eindringen kann, da deren radiale Innenabmessung zwar kleiner als die des Stützelementes, jedoch grösser als die des Gleitringes sind. An die Konfiguration des Gleitrings werden aufgrund der erfindungsgemässen Massnahmen keine besonderen Anforderungen gestellt, so dass dieser nicht nur minimale radiale Abmessungen, sondern auch eine fertigungsgünstige einfache rechteckförmige Querschnittsgestalt haben kann. Andere vorteilhafte Ausgestaltungen der Erfindung und die sich daraus ergebenden Wirkungen und Vorteile werden aus den Unteransprüchen und der nachfolgenden Erläuterung deutlich.

Die Erfindung wird nachfolgend anhand einer Ausführungsform und der Zeichnung näher erläutert. Es zeigen:
Fig. 1 in längsgeschnittener fragmentarischer Gesamtansicht eine Gleitringdichtungsanordnung nach der Erfindung im Einbauzustand, und
Fig. 2 in vergrösserter längsgeschnittener Detailansicht den rotierenden Teil der Gleitringdichtungsanordnung nach Fig. 1.

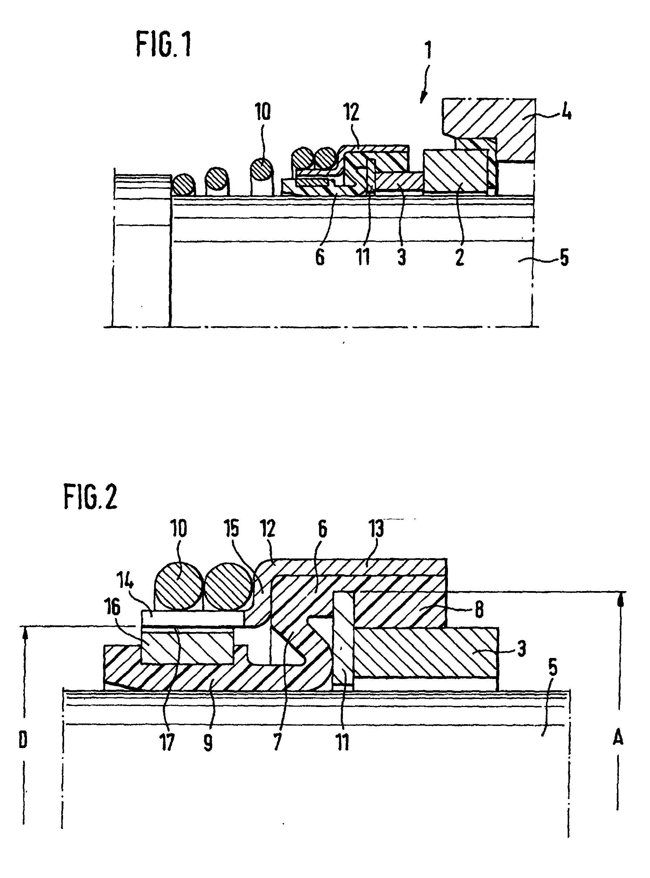

Die Gleitringdichtungsanordnung nach der Erfindung trägt in Fig. 1 das allgemeine Bezugszeichen 1 und umfasst ein paar zusammenwirkende Gleitringe 2, 3, von denen der Gleitring 2 an einem stationären Bauteil, z. B. dem Gehäuse 4 einer Pumpe oder dgl., in geeigneter Weise drehfest gehalten ist. Der andere Gleitring 3 ist dagegen zur gemeinsamen Drehung mit einem rotierenden Bauteil, z. B. einer Welle 5, vorgesehen, die mittels der Gleitringdichtungsanordnung gegenüber dem Gehäuse 4 abgedichtet werden soll. Die Gleitringe 2, 3 haben radiale oder annähernd radiale Dichtflächen, zwischen denen bei Betrieb ein Dichtspalt gebildet wird. Geeignete Materialien für die Gleitringe 2, 3 sind z.B. Burgmann-Lexikon a.a.O., S. 269 zu entnehmen. Bezüglich näherer Details kann daher hierauf Bezug genommen werden.

Nachfolgend wird auf Fig. 2 Bezug genommen, die den rotierenden Teil der Gleitringdichtungsanordnung in vergrössertem Masstab zeigt. Dieser umfasst eine Balganordnung mit einem Balgelement 6 aus einem nachgiebigen Material, wie Gummi oder Elastomer, an dem in an sich bekannter Weise drei Bereiche definiert werden können, nämlich ein erster Montagebereich 8, ein davon axial beabstandeter zweiter Montagebereich 9 und ein die beiden Montagebereiche 8, 9 miteinander verbindender faltbarer Zwischenbereich 7. Der faltbare Zwischenbereich 7 kann beim Einsatz, wie in Fig. 2 gezeigt ist, eine Z-förmige Konfiguration annehmen. Die Erfindung ist jedoch auf eine derartige Konfiguration des faltbaren Bereiches 7 nicht beschränkt. Andere mögliche Konfigurationen sind z.B. Burgmann-Lexikon a.a.O., S. 23 zu entnehmen. Die Montagebereiche 8, 9 haben vorzugsweise eine im wesentlichen rohrförmige Ausbildung.

Die Balganordnung umfasst ferner ein Mitnehmergehäuse 12 mit einem ersten Kraftübertragungsbereich 13 und einem zweiten im Durchmesser reduzierten Kraftübertragungsbereich 14, die durch einen zwischenliegenden Schulter- oder Absatzbereich 15 miteinander verbunden sind. Der erste Kraftübertragungsbereich 13 ist zur Aufnahme des ersten Montagebereiches 8 des Balgelementes 6 ausgelegt, dergestalt, dass bei einer koaxialen übergreifenden Beziehung zwischen dem Gleitring 3, dem Montagebereich 8 und dem Kraftübertragungsbereich 13, wie sie in Fig. 2 gezeigt ist, der Montagebereich 8 des Balgelementes 6 sandwichartig zwischen der äusseren Umfangsfläche des Gleitrings 3 und der inneren Umfangsfläche des Kraftübertragungsbereiches 13 eingeschlossen und zusammengepresst ist, so dass eine kraftschlüssige Verbindung zwischen den genannten Bauteilen zustande kommt. Eine Drehkraft kann daher vom Kraftübertragungsbereich 13 über den Montagebereich 8 auf den Gleitring 3 im wesentlichen schlupffrei übertragen werden.

Wenn erwünscht, könnte an Stelle einer kraftschlüssigen Verbindung unter den genannten Bauteilen auch eine feste Verbindung, z. B. durch Kleben oder dgl., vorgesehen sein.

Der zweite Kraftübertragungsbereich 14 des Mitnehmergehäuses 12 definiert eine Bohrung oder Durchgangsöffnung mit einer radialen Innenabmessung D. Der zweite Kraftübertragungsbereich 14 kann eine Vielzahl umfänglich verteilt angeordnete, axial sich erstreckende Finger umfassen, die in Axialnuten 17 in einem Mitnehmerring 16 aus einem geeigneten Material, wie Metall, eingreifen. Der Mitnehmerring 16 ist, vorzugsweise kraftschlüssig, am zweiten Montagebereich 9 des Balgelementes 6 fixiert, oder diese Fixierung wird bei der Montage erhalten, indem das Balgelement 6 mit dem Mitnehmerring 16 mit Untermass auf die Welle 5 aufgesetzt wird. Eine Drehung der Welle 5 wird daher über den Montagebereich 9 und den Mitnehmerring 16 auf das Mitnehmergehäuse 12 und von dort in der vorbeschriebenen Weise auf den Gleitring 3 übertragen.

Eine Vorspanneinrichtung ist vorgesehen, um den Gleitring 3 gegen den stationären Gleitring 2 mechanisch vorzuspannen. Obschon andere Vorspanneinrichtungen vorgesehen sein könnten, umfasst diese bei der vorliegenden Ausführungsform der Erfindung vorzugsweise eine Wendel- oder Schraubenfeder 10, die sich einerends an einem Wellenabsatz, siehe Fig. 1, und anderenends am Schulterbereich 15 des Mitnehmergehäuses 12 abstützt. Vorzugsweise umfasst die Wendelfeder 10 einige eng anliegende Windungen, die den zweiten Kraftübertragungsbereich 14 des Mitnehmergehäuses 12 aussenumfänglich umgeben und einer eventuellen Spreizung der Finger des Kraftübertragungsbereiches 14 entgegenwirken. Die Wendelfeder 10 hat ferner vorzugsweise, wie Fig. 1 zeigt, eine konische Ausbildung.

Erfindungsgemäss ist ferner zur axialen Abstützung des Gleitrings 3 ein Stützelement 11 vorgesehen, das in geeigneter Weise vom Balgelement 6 gehalten ist. Beim Stützelement 11 kann es sich um eine Ringscheibe aus einem geeigneten Material, wie Metall, handeln, das eine ausreichende Steifigkeit besitzt, um, anders als das Balgelement 6, axial einwirkenden Kräften nicht oder nur in wesentlich verringertem Masse durch Verformung nachzugeben. Anstelle von Metall könnte das Stützelement 11 auch aus einem formstabilen Kunststoffmaterial wie PEEK oder dgl. bestehen.

Das Stützelement 11 ist aussenumfänglich, kraftschlüssig oder durch Klebung, in einer Nut im ersten Montagebereich 8 des Balgelementes 6 nahe dem faltbaren Bereich 7 gehalten und enthält eine Bohrung, durch die die Welle 5 hindurchgeführt ist. Das Stützelement 11 hat ferner eine bestimmte radiale Aussenabmessung A, die um ein geeignetes Mass grösser als die radiale Innenabmessung D der Bohrung des zweiten Kraftübertragungsbereiches 14 des Mitnehmergehäuses 12 ist. Der Gleitring 3 kann mit seiner benachbarten Endseite an einer Stirnseite des Stützelementes 11 axial anliegen, während sich an der gegenüberliegenden Stirnseite des Stützelementes 11 ein Abschnitt des faltbaren Bereichs 7 des Balgelementes 6 beim Einsatz und Betrieb abstützen kann.

Mit dem vorbeschriebenen Aufbau der Gleitringdichtungsanordnung wird erreicht, dass eine axiale Kraft, die durch die mechanische Vorspanneinrichtung 10 oder unter den beim Betrieb einwirkenden hydraulischen Drücken aufgebracht wird und eine axiale Bewegung des Mitnehmergehäuses 12 und des Balgelementes 6 relativ zum Gleitring 3 bewirken kann, nicht dazu führen kann, dass der rotierende Gleitring 3, der aufgrund seines Zusammenwirkens mit dem stationären Gleitring 2 an einer ebensolchen axialen Bewegung im wesentlichen gehindert ist, in die Bohrung mit der Abmessung D des Mitnehmergehäuses 12 unter weitgehender Zerstörung oder Beschädigung des Balgelementes 6 eindringen kann. Übermässige auf die Gleitringdichtungsanordnung einwirkende hydraulische oder mechanische axiale Kräfte können lediglich zur Folge haben, dass das Stützelement 11 zu einer Position nahe dem Schulterbereich 15 des Mitnehmergehäuses 12 bewegt wird und dort zum Stillstand kommt, was keine schädliche Auswirkungen auf das Balgelement 6 hat.

Die Erfindung ermöglicht es, dass der Gleitring 3 hinsichtlich seiner radialen Abmessungen minimiert werden kann und z. B. eine radiale äussere Abmessung haben kann, die kleiner als das Mass D des Mitnehmergehäuses 12 ist.

Die Erfindung wurde vorausgehend anhand einer Ausführungsform mit Mitnehmergehäuse beschrieben. Das Vorsehen eines steifen Stützelementes, an dem sich der Gleitring axial abstützen kann, um zu verhindern, dass der Gleitring in empfindliche Bereiche des Balgelementes eindringen kann, kann auch Vorteile bei einer Anordnung ohne Mitnehmergehäuse bieten.

## Patentansprüche

1. Gleitringdichtungsanordnung, mit einem Paar zusamenwirkendender Gleitringe (2,3), von denen einer drehfest an einem stationären Bauteil montierbar ist und der andere zur gemeinsamen Drehung mit einem rotierenden Bauteil vorgesehen ist, einer Balganordnung mit einem Balgelement (6) aus nachgiebigem Material mit axial beabstandeten, über einen zwischenliegenden faltbaren Bereich (7) miteinander verbundenen Montagebereichen (8,9), von denen einer gegenüber dem rotierenden Bauteil fixierbar ist und der andere mit dem rotierenden Gleitring in Drehkraft übertragender Beziehung steht, einer den rotierenden Gleitring gegen den stationären Gleitring mechanisch beaufschlagenden Vorspanneinrichtung (10), und einem die Balganordnung umfassenden Mitnehmergehäuse (12) mit axial beabstandeten Kraftübertragungsbereichen (13,14), von denen einer mit dem gleitringseitigen und der andere mit dem bauteilseitigen Montagebereich des Balgelementes in kraftübertragender Beziehung steht, **gekennzeichnet durch** ein vom Balgelement (6) gehaltenes im wesentlichen steifes Stützelement (11) mit einer radialen Aussenabmessung A, an dem der rotierende Gleitring (3) axial abgestützt ist, wobei der dem bauteilseitigen Montagebereich (9) zugewandte Kraftübertragungsbereich (14) des Mitnehmergehäuses (12) eine radiale Innenabmessung D hat, die kleiner als die radiale Aussenabmessung A des Stützelementes ist.

2. Gleitringdichtungsanordnung nach Anspruch 12, **dadurch gekennzeichnet, dass** die Vorspanneinrichtung (10) einerends am Mitnehmergehäuse (12) abgestützt ist.

3. Gleitringdichtungsanordnung nach AnsprUch 1 oder 2, **dadurch gekennzeichnet, dass** die Vorspanneinrichtung eine sich verjüngende Wendelfeder (10) umfasst.

4. Gleitringdichtungsanordnung nach einem der vorhergehenden Ansprüche, **dadurch gekennzeichnet, dass** zwischen dem bauteilseitigen Montagebereich (9) des Balgelementes (6) und dem zugewandten Kraftübertragungsbereich (14) des Mitnehmergehäuse (12) eine in Axialrichtung relativbewegliche, drehfeste Verbindung vorgesehen ist.

5. Gleitringdichtungsanordnung nach einem der vorhergehenden Ansprüche, **dadurch gekennzeichnet, dass** das Stützelement (11) an einer axialen Stelle des gleitringseitigen Montagebereichs (8) nahe dem faltbaren Bereich (7) des Balgelementes (6) vorgesehen ist.

6. Gleitringdichtungsanordnung nach einem der vorhergehenden Ansprüche, **dadurch gekennzeichnet, dass** das Stützelement eine Ringscheibe (11) ist.

7. Gleitringdichtungsanordnung nach einem der vorhergehenden Ansprüche, **dadurch gekennzeichnet, dass** das Stützelement (11) aus einem metallischen Material besteht.

8. Gleitringdichtungsanordnung nach einem der Ansprüche 1 bis 6, **dadurch gekennzeichnet, dass** das Stützelement (11) aus einem Kunststoffmaterial mit höherer Steifigkeit als die des Materials des Balgelementes (6) besteht.

## Claims

1. A mechanical face seal device including a pair of co-operating seal rings (2,3) one thereof being provided for mounting in a non-rotational relationship on a stationary component, whilst the other for common rotation with a rotary component, a bellows assembly comprising a bellows member (6) of resilient material having axially spaced mounting portions (8,9) connected with each other through an intermediate foldable portion (7), one of said mounting portions being provided for mounting on the rotary component whilst the other mounting portion being mounted in torque transferring relationship to said rotary seal ring, a biasing means (10) for mechanically biasing the rotary seal ring against the stationary seal ring, and a driving housing (12) encompassing said bellows assembly and having axially spaced force transferring portions (13,14), one of said force transferring portions being in force transferring relationship with said mounting portion on the rotary seal ring side and the other force transferring portion in force transferring relationship to said mounting portion on the component side, **characterized by** an essentially stiff supporting member (17) held by said bellows assembly (6) and having a radial outer dimension A, said rotary seal ring (3) being axially supported by said supporting member, whereby said force transferring portion (14) of the driving housing (12) facing said mounting portion (9) on the component side has a radial inner dimension D less than the radial outer dimension A of said supporting member

2. The mechanical face seal device according to claim 1, **characterized in that** said biasing means (10) being supported at one of the axial ends thereof by said driving housing (12).

3. The mechanical face seal device according to claim 1 or 2, **characterized in that** said biasing means comprises a tapering spiral spring (10).

4. The mechanical face seal device according to one of the preceding claims, **characterized in that** said mounting portion (9) of the bellows member (6) on the component side and the facing force transferring portion (14) of said driving housing (12) being connected with each other in a non-rotational manner whilst being moveable relatively to each other in an axial direction.

5. The mechanical face seal device according to one of the preceding claims, **characterized in that** said supporting member (11) being provided at an axial position of said mounting portion (8) on the seal ring side close to the foldable portion (7) of the bellows member (6).

6. The mechanical face seal device according to one of the preceding claims, **characterized in that** said supporting member is an annular disc (11).

7. The mechanical face seal device according to one of the preceding claims, **characterized in that** said supporting member (11) is made of metallic material.

8. The mechanical face seal device according to one of the preceding claims, **characterized in that** said supporting member (11) is made of a plastics material having greater stiffness than that of the material of the bellows member (6).

## Revendications

1. Dispositif d'étanchement à bagues de glissement, comprenant une paire de bagues de glissement (2, 3) associées, dont l'une peut être montée à verrouillage antirotation sur une pièce structurelle fixe, et l'autre est prévue pour tourner conjointement à une pièce structurelle rotative ; un ensemble à soufflet muni d'un élément (6) formant soufflet en un matériau doué de souplesse élastique, comportant des zones de montage (8, 9) axialement distantes et reliées l'une à l'autre par une zone intermédiaire (7) repliable, zones dont l'une peut être consignée à demeure vis-à-vis de la pièce structurelle rotative, et l'autre est en relation de transmission d'une force rotatoire avec la bague rotative de glissement ; un système de précontrainte (10), sollicitant mécaniquement la bague rotative de glissement contre la bague fixe de glissement; et un carter d'entraînement (12) englobant l'ensemble à soufflet et muni de régions axialement distantes (13, 14) de transmission de forces, dont l'une et l'autre sont respectivement en relation de transmission de forces avec les zones de montage de l'élément formant soufflet qui sont situées, respectivement, côté bague de glissement et côté pièce structurelle, **caractérisé par** un élément d'appui (11) pour l'essentiel rigide, présentant une dimension extérieure radiale A, retenu par l'élément (6) formant soufflet, et contre lequel la bague de glissement (3) rotative prend axialement appui, sachant que la région (14) de transmission de forces du carter d'entraînement (12), qui est tournée vers la zone de montage (9) située côté pièce structurelle, possède une dimension intérieure radiale D plus petite que la dimension extérieure radiale A de l'élément d'appui.

2. Dispositif d'étanchement à bagues de glissement, selon la revendication 1, **caractérisé par le fait que** le système de précontrainte (10) prend appui par une extrémité contre le carter d'entraînement (12).

3. Dispositif d'étanchement à bagues de glissement, selon la revendication 1 ou 2, **caractérisé par le fait que** le système de précontrainte englobe un ressort spiroïdal (10) se rétrécissant.

4. Dispositif d'étanchement à bagues de glissement, selon l'une des revendications précédentes, **caractérisé par le fait qu'**une liaison à verrouillage rotatif, douée de mobilité relative dans le sens axial, est prévue entre la zone de montage (9) de l'élément (6) formant soufflet qui est située côté pièce structurelle, et la région (14) de transmission de forces du carter d'entraînement (12) qui est tournée en vis-à-vis.

5. Dispositif d'étanchement à bagues de glissement, selon l'une des revendications précédentes, **caractérisé par le fait que** l'élément d'appui (11) est prévu en un emplacement axial de la zone de montage (8) située côté bague de glissement, à proximité de la zone repliable (7) de l'élément (6) formant soufflet.

6. Dispositif d'étanchement à bagues de glissement, selon l'une des revendications précédentes, **caractérisé par le fait que** l'élément d'appui est un disque annulaire (11).

7. Dispositif d'étanchement à bagues de glissement, selon l'une des revendications précédentes, **caractérisé par le fait que** l'élément d'appui (11) consiste en un matériau métallique.

8. Dispositif d'étanchement à bagues de glissement, selon l'une des revendications 1 à 6, **caractérisé par le fait que** l'élément d'appui (11) consiste en une matière synthétique douée d'une rigidité supérieure à celle du matériau de l'élément (6) formant soufflet
